# FASCICULE DE BREVET EUROPEEN

(11) **EP 0 408 459 B1**
(45) Date de publication et mention de la délivrance du brevet: **30.03.1994**
(21) Numéro de dépôt: 90402016.1
(22) Date de dépôt: 12.07.1990
(51) Int. Cl.: C08G 18/38, C08G 18/76, G02B 1/04

(54) **Compositions de polymères à base de polythiouréthanes pour la fabrication de verres organiques**
Auf Polythiourethanen basierende Polymerzusammensetzungen für die Herstellung organischer Gläser
Polythiourethane-based polymer compositions suitable for the fabrication of organic glasses

(30) Priorité: 13.07.1989 FR 8909492
(43) Date de publication de la demande: 16.01.1991
(73) Titulaire: ESSILOR INTERNATIONAL Compagnie Générale d'Optique, F-94028 Créteil Cédex (FR)
(72) Inventeur: Yean, Leanirith, F-91160 Longjumeau (FR); Bochu, Christophe, F-94700 Maisons-Alfort (FR)
(74) Mandataire: Thibon-Littaye, Annick

(56) Documents cités:
- EP-A- 0 235 743
- EP-A- 0 329 386
- US-A- 3 984 456
- US-A- 4 680 369
- US-A- 4 689 387

## Description

L'invention concerne la fabrication de verres organiques à base de polyuréthanes du type de ceux que l'on utilise pour constituer des lentilles optiques, et plus particulièrement des lentilles ophtalmiques, étant entendu que les uréthanes résultent de la condensation de fonctions isocyanate avec des fonctions alcool, par toute méthode connue.

Elle vise principalement à la conception d'une composition de polyuréthane capable de conduire par polymérisation à des verres organiques, ou matières plastiques transparentes, présentant à la fois un indice de réfraction élevé, avec une faible dispersion, et de grandes qualités de résistance mécanique, ou plus particulièrement thermomécanique.

De nombreuses recherches ont déjà été effectuées dans le sens d'une augmentation de l'indice des matériaux organiques transparents, afin de mieux mettre à profit leur légèreté par rapport aux verres minéraux dans le domaine de l'optique. Elles ont conduit notamment à utiliser des résines de polyuréthane dont la molécule renferme des atomes de soufre.

C'est ainsi par exemple que le brevet américain US 4 680 369 préconise l'emploi de résines obtenues en faisant réagir un polyisocyanate tel qu'un xylylène diisocyanate ou hexaméthylène diisocyanate avec un monomère polyhydroxylé comportant des fonctions intermédiaires de type thioéther. Toutefois, elles ne permettent pas d'atteindre les valeurs d'indice de réfraction recherché. D'autres solutions consistent à faire réagir le polyisocyanate avec un monomère de type thiol plutôt que alcool, comme il est décrit dans le brevet américain US 4 689 387 ou la demande de brevet européen 0 235 743.

Il semble que la présence de groupes mercaptan dans le monomère di ou tri-fonctionnel réagissant avec le polyisocyanate soit favorable à l'indice de réfraction. Par contre, il n'en va généralement pas de même pour ce qui est des propriétés mécaniques, et les matériaux polymères obtenus font preuve, en particulier, d'un point de transition vitreuse trop faible pour leur permettre de supporter les traitements thermiques que l'on est amené à leur faire subir, par exemple dans les traitements de surface des lentilles optiques constituées en de tels matériaux.

En pratique, les techniques de l'art antérieur tendent à sélectionner spécialement des constituants de plus en plus complexes et difficiles à mettre en oeuvre, à partir des formules générales de monomères plurifonctionnels que l'on utilise couramment dans le milieu de la fabrication de verres organiques à base de polyuréthanes. On peut citer à cet égard des composés thiols plurifonctionnels de type aromatique, tels les mercaptobenzènes de la demande de brevet européen 0235743, parfois en outre de type thioéther, ou des monomères hétérocycliques, tels les composés à cycle triazinique de la demande de brevet européen 0268896, ou encore des polyisocyanates eux-mêmes soufrés. Et quand on recommande de combiner un polyisocyanate avec un monomère à groupes mercaptans (-SH) de type aliphatique, il s'agit de composés issus de la polycondensation de glycols, dans lesquels de ce fait la chaîne est interrompue par des groupements esters ou thio-éther intermédiaires, comme c'est le cas pour le tétrakis-thio-glycolate de pentaérythritol et le tris-thioglycolate de triméthylol-propane cités dans le brevet américain cité.

Globalement, l'emploi de ce genre de monomères se heurte à des difficultés d'ordres technique et économique par le fait qu'ils correspondent à des composés qui ne sont pas aisément disponibles et qui demandent des procédures délicates de synthèse, ce qui les rend particulièrement onéreux. De plus, ils entraînent souvent d'autres difficultés de mise en oeuvre pour la fabrication des polyuréthanes, notamment quand ils forment des solutions visqueuses ou quand la réaction des fonctions thiol sur les fonctions isocyanate se trouve perturbée par leur structure.

Pour résoudre le problème, l'invention a recours à des monomères d'un type nouveau dans ce genre d'application. Il s'agit toutefois de composés chimiques qui sont en eux-mêmes connus et qui sont en général disponibles commercialement à bon marché, mais pour être utilisés dans des domaines tout autres que celui de la fabrication des polymères. L'emploi qui en est fait ici comme monomères condensables avec des polyisocyanates pour la fabrication de polyuréthanes, et plus spécifiquement pour la fabrication de verres organiques, n'était donc nullement évident pour l'homme de l'art en cette matière. L'invention vise par là l'obtention d'indices de réfraction élevés, pouvant atteindre des valeurs supérieures à 1,6, ou de préférence 1,64, combinés à une température de transition vitreuse supérieure à 100 °C et à une constringence élevée, dans des verres qui ne doivent pas se dégrader dans le temps, ni à la lumière, ni aux intempéries (que ce soit en particulier par jaunissement ou par perte des propriétés mécaniques), qui doivent présenter une bonne résistance aux chocs, à l'abrasion et à la rayure, être colorables et faciles à démouler, et dont les propriétés thermomécaniques doivent de préférence être bonnes même au-dessus du point de transition vitreuse.

Conformément à l'invention une composition de polyuréthane pour verres organiques comprend un premier constituant formé par un polyisocyanate au moins difonctionnel, de préférence de type isocyanate d'arylalkyle, classique en soi, et un second constituant formé par un monomère saturé acyclique porteur d'au moins trois fonctions réactives à l'égard des isocyanates pour former des liaisons carbamate, parmi lesquelles fonctions réactives au moins 40 % en nombre sont des groupes mercaptan -SH, la proportion desdites fonctions réactives étant d'au moins 70 % en masse par rapport à la masse moléculaire dudit monomère.

Il ressort de ces exigences que le monomère peut ne comporter que deux atomes de carbone par molécule, sous la réserve que chaque atome de carbone soit porteur d'un groupement -SH ou -OH. Mais d'un manière plus générale, on a le plus souvent intérêt à utiliser un monomère au moins tri-fonctionnel, constitué par un composé aliphatique saturé acyclique qui comporte au moins trois atomes de carbone par molécule, dont la moitié au moins sont pourvus d'une fonction réactive -SH ou -OH, la moitié au moins de ces fonctions réactives étant des groupes mercaptan -SH.

En pratique, il semble que les meilleurs résultats sont obtenus lorsque la molécule du monomère comporte entre trois et dix atomes de carbone, et de préférence entre trois et six atomes de carbone, et que parmi ses fonctions réactives au moins 50 % en nombre sont des groupes mercaptan -SH , la proportion desdites fonctions réactives étant d'au moins 70 % en masse par rapport à la masse moléculaire dudit monomère. Par ailleurs, il est le plus souvent souhaitable que la totalité de ces fonctions réactives soient des groupes mercaptans.

Les exigences des caractéristiques de l'invention conduisent à utiliser préférentiellement des monomères constitués par des composés de type alcane à chaîne linéaire ou ramifiée, dont les chaînes alcane ne sont pas interrompues par une fonction éther ou thioéther reliant deux atomes de carbone. En d'autres termes, ils ne contiennent pas d'hétéroatome S ou O intramoléculaire.

Par ailleurs, si les composés utilisés comme monomères selon l'invention sont des alcanes à chaîne aliphatique linéaire, il est souhaitable qu'au moins les 3/4, et de préférence la totalité des atomes de carbone qu'ils comportent soient porteurs de fonctions réactives alcool ou thiol, étant rappelé qu'il est plus avantageux que ces fonctions réactives soient en totalité de type thiol, donc formées de groupes mercaptans -SH. La même condition peut avantageusement s'appliquer à chacune de la plupart des branches d'un alcane à chaîne ramifiée.

Naturellement, l'invention s'étend à l'emploi des compositions décrites pour la fabrication de verres en polymère transparent et à l'application de ces verres comme lentilles optiques. La mise en oeuvre de ces compositions à cette fin s'effectue d'une manière en elle-même classique, par les techniques de polymérisation usuelles des polyuréthanes, de préférence simultanées avec une mise en forme par moulage. En général, il s'agit d'une polymérisation thermique appliquée à une composition exclusivement formée de deux constituants de base tels que définis ci-dessus, additionnés d'un catalyseur de polymérisation approprié. Le catalyseur de polymérisation est en général un ester métallique, le plus courant étant le dibutyl-laurate d'étain. Les deux constituants de base sont présents dans la composition dans des proportions déterminées en fonction de la stoechiométrie des réactions conduisant à des liaisons carbamate. On doit cependant comprendre là que chacun des constituants peut lui-même comprendre plusieurs composés différents répondant à la définition qui lui a été donnée.

Il est remarquable que grâce à l'invention, il soit apparu possible de combiner dans une même composition toutes les capacités recherchées et que dans le polymère résultant, l'on ait pu obtenir des améliorations à la fois de l'indice de réfraction, de la température de transition vitreuse et des autres propriétés thermomécaniques, jusqu'à des valeurs qui ne savaient être atteintes par aucune des compositions de l'art antérieur. Ainsi, les compositions préférées selon l'invention conduisent à des polymères transparents de type poly(thio)uréthane qui présentent un indice de réfraction supérieur à 1,6 et un coefficient de constringence (inverse de la dispersion) au moins de l'ordre de 30, pour une température de transition vitreuse supérieure a 100 °C. Dans des modes de réalisation préférés, l'indice de réfraction est supérieur à 1,64.

Dans ce cadre, un constituant à fonctions réactives isocyanate particulièrement avantageux est le xylylène diisocyanate, habituellement disponible sur le marché sous la forme d'un mélange d'isomères méta et para. Cependant d'autres constituants homologues peuvent être choisis parmi les diisocyanates d'aryl-alkyle répondant à la formule générale :

OCN - R -(C₆H₄)- R' - NCO

dans laquelle R et R', identiques ou différents, sont chacun un radical alkyle comprenant de 1 à 3 atomes de carbone et sont placés l'un par rapport à l'autre en position ortho, méta ou para du noyau aromatique. Dans le cas du xylylène diisocyanate, R et R' ont tous deux pour valeur -CH₂-.

Cependant, il est souhaitable que si le polyisocyanate est précisément le xylylène diisocyanate, le monomère soufré ne soit pas le pentaérythrithiol. Enfin, il est également souhaitable, d'une manière générale, que la composition suivant l'invention ne contienne aucun polyisocyanate soufré, de sorte que tous les atomes de soufre dans le polymère final proviennent des groupes mercaptans du monomère thiol plurifonctionnel.

On décrira maintenant l'invention plus en détails dans le cadre d'exemples particuliers de mise en oeuvre qui ne sont nullement limitatifs.

### EXEMPLE 1 (comparatif)

Dans cet exemple, on utilise comme monomère à groupes mercaptan le dimercapto-2,3 propanol, de formule HSCH₂-CH₂SH-CH₂OH. La proportion des fonctions réactives à l'égard des isocyanates est de 66,9 % en masse par rapport à la masse moléculaire, et le rapport SH/SH+OH est de 66,7 % en nombre.

Dans un flacon, on mélange 9 g de dimercapto-2,3 propanol et 20,5 g de xylylène diisocyanate (XDI), ce qui représente un rapport (OH + SH)/NCO = 1. On ajoute 0,02 % en masse de dibutyllaurate d'étain comme catalyseur de polymérisation.

Après avoir été dégazé, ce mélange est placé dans un moule à lentille optique. Ce moule étant en verre, ses parois ont été traitées pour éviter l'adhésion du polymère sur le verre. La polymérisation est effectuée selon un cycle de température comprenant 3 h pour passer de la température ambiante à 80 °C, puis 3 h de maintien à 80 °C, suivies d'une montée en température de 80 °C à 130 °C en 2 h et enfin de 3 h de maintien à 130 °C.

Après démoulage, on obtient une lentille parfaitement transparente, dont l'indice de réfraction est de 1,622 et la constringence (inverse du coefficient de dispersion) est de 37. La densité du polymère obtenu est de 1,28 et sa température de transition vitreuse de 130 °C.

### EXEMPLE 2

En procédant de la même manière que dans l'exemple 1, mais en remplaçant le dimercapto-2,3 propanol par un autre monomère dont la molécule est un alcane à chaîne linéaire à trois ou quatre atomes de carbone tous porteurs d'un groupe réactif hydroxyle ou mercaptan.

On a ainsi obtenu des polymères présentant les propriétés suivantes :
a) Composé : Dithioérythritol (comparatif)
   - Fonctions réactives :: 64,9 % en masse
   - Rapport SH/SH+OH :: 50 % en nombre
   - Indice de réfraction :: 1,615
   - Constringence :: 33
   - Densité :: 1,3
   - Transition vitreuse :: 161 °C
b) Composé : Trithioglycérine (selon l'invention)
   - Fonctions réactives :: 70,7 % en masse
   - Rapport SH/SH+OH :: 100 % en nombre
   - Indice de réfraction :: 1,654
   - Constringence :: 31
   - Densité :: 1,38
   - Transition vitreuse :: 149 °C
c) Composé : Tétramercaptobutane (selon l'invention)
   - Fonctions réactives :: 71 % en masse
   - Rapport SH/SH+OH :: 100 % en nombre
   - Indice de réfraction :: 1,667
   - Constringence :: 32
   - Densité :: 1,45
   - Transition vitreuse :: 183 °C

### EXEMPLE 3 (comparatif)

On opère comme dans les exemples précédents en utilisant comme comme monomère un alcane à chaine ramifié au moins trivalent en fonctions thiol, et plus particu-lièrement le pentaérythrithiol, avec comme polyisocyanate le diéthylbenzène diisocyanate. On obtient les résultats suivants :

Composé : C --(-CH₂SH)₄
- Fonctions réactives :: 66 % en masse
- Rapport SH/SH+OH :: 100 % en nombre
- Indice de réfraction :: 1,646
- Constringence :: 29
- Densité :: 1,36
- Transition vitreuse :: 110 °C

## Revendications

1. Composition de polyuréthane pour verres organiques caractérisée en ce qu'elle comprend : un premier constituant formé par un polyisocyanate au moins difonctionnel, et un second constituant formé par un monomère saturé acyclique porteur d'au moins trois fonctions réactives à l'égard des isocyanates pour former des liaisons carbamate, parmi lesquelles fonctions réactives au moins 40 % en nombre sont des groupes mercaptan -SH, la proportion desdites fonctions réactives étant d'au moins 70 % en masse par rapport à la masse moléculaire dudit monomère.

2. Composition selon la revendication 1, caractérisée en ce qu'elle ne contient pas de polyisocyanate dont les molécules comportent des atomes de soufre.

3. Composition selon la revendication 2, caractérisée en ce que ledit premier constituant est de type isocyanate d'arylalkyle difonctionnel.

4. Composition selon l'une quelconque des revendications 1 à 3, caractérisée en ce que ledit second constituant est un monomère au moins tri-fonctionnel, constitué par un composé aliphatique acyclique qui comporte au moins trois atomes de carbone par molécule, dont la moitié au moins sont pourvus d'une fonction réactive -SH ou -OH, la moitié au moins de ces fonctions réactives étant des groupes mercaptan -SH.

5. Composition selon l'une quelconque des revendications 1 à 4, caractérisée en ce que ledit monomère est exempt d'hétéroatome de soufre ou oxygène interrompant la chaîne, et comporte entre trois et dix atomes de carbone, et en ce que parmi ses fonctions réactives au moins 50 % en nombre sont des groupes mercaptan -SH.

6. Composition selon l'une quelconque des revendications 1 à 5, caractérisée en ce que ledit monomère est choisi parmi les composés de type alcane à chaîne aliphatique linéaire ou ramifiée, dans lesquels au moins les 3/4, et de préférence la totalité des atomes de carbone qu'ils comportent soient porteurs de fonctions réactives.

7. Composition selon la revendication 6, caractérisée en ce que lesdites fonctions réactives sont en totalité des groupes mercaptans, à l'exclusion de groupes -OH.

8. Composition selon la revendication 7, caractérisée en ce que ledit monomère est la trithioglycérine.

9. Composition selon la revendication 7, caractérisée en ce que ledit monomère est le tétramercaptobutane.

## Patentansprüche

1. Polyurethan-Zusammensetzung für organische Gläser, dadurch gekennzeichnet, daß sie umfaßt: einen ersten Bestandteil aus einem wenigstens difunktionalen Polyisocyanat und einen zweiten Bestandteil aus einem gesättigten, acyclischen Monomer, das wenigstens drei mit den Isocyanatgruppen reaktive Gruppen trägt, um Carbamat-Bindungen zu bilden, wobei eine Zahl von wenigstens 40 % dieser reaktiven Gruppen Mercaptangruppen -SH sind und wobei der Anteil der besagten reaktiven Gruppen wenigstens 70 Masse-%, bezogen auf die Molekularmasse des besagten Monomeren, ausmacht.

2. Zusammensetzung gemäß Anspruch 1, dadurch gekennzeichnet, daß sie kein Polyisocyanat enthält, dessen Moleküle Schwefelatome aufweisen.

3. Zusammensetzung gemäß Anspruch 2, dadurch gekennzeichnet, daß der genannte erste Bestandteil vom Typ eines bifunktionalen Arylalkylisocyanates ist.

4. Zusammensetzung gemäß einem der Ansprüche 1 bis 3, dadurch gekennzeichnet, daß der genannte zweite Bestandteil ein wenigstens trifunktionales Monomer ist, bei dem es sich um eine aliphatische, acyclische Verbindung handelt, die wenigstens drei Kohlenstoffatome pro Molekül enthält, von denen mindestens die Hälfte reaktive -SH- oder -OH-Gruppen besitzt, wobei wenigstens die Hälfte dieser reaktiven Gruppen Mercaptangruppen -SH sind.

5. Zusammensetzung gemäß einem der Ansprüche 1 bis 4, dadurch gekennzeichnet, daß das genannte Monomer keine die Kette unterbrechende Schwefel- oder Sauerstoff-Heteroatomen aufweist und zwischen drei und zehn Kohlenstoffatome enthält, und daß von dessen reaktiven Gruppen eine Zahl von wenigstens 50 % Mercaptan-Gruppen -SH sind.

6. Zusammensetzung gemäß einem der Ansprüche 1 bis 5, dadurch gekennzeichnet, daß das genannte Monomer ausgewählt ist unter Verbindungen vom Alkantyp mit einer aliphatischen, geradkettigen oder verzweigten Kette, bei denen wenigstens 3/4 und vorzugsweise alle Kohlenstoffatome Träger der reaktiven Gruppen sind.

7. Zusammensetzung gemäß Anspruch 6, dadurch gekennzeichnet, daß die genannten reaktiven Gruppen alle Mercaptan-Gruppen, unter Ausschluß der -OH-Gruppen, sind.

8. Zusammensetzung gemäß Anspruch 7, dadurch gekennzeichnet, daß das genannte Monomer Trithioglycerin ist.

9. Zusammensetzung gemäß Anspruch 7, dadurch gekennzeichnet, daß das genannte Monomer Tetramercaptobutan ist.

## Claims

1. Polyurethane composition for organic glasses characterized in that it comprises a first constituent formed by a polyisocyanate which is at least bifunctional, and a second constituent formed by a saturated acyclic monomer carrying at least three functional groups which can react with isocyanates to form carbamate bonds, at least 40% by number of the reactive functional groups being mercaptan -SH groups, the proportion of the said reactive functional groups being at least 70% by mass with respect to the molecular mass of the said monomer.

2. Composition according to Claim 1, characterized in that it does not contain a polyisocyanate the molecules of which contain sulphur atoms.

3. Composition according to Claim 2, characterized in that the said first constituent is a bifunctional arylalkyl isocyanate type.

4. Composition according to any one of Claims 1 to 3, characterized in that the said second constituent is a monomer which is at least trifunctional, consisting of an acyclic aliphatic compound which has at least three carbon atoms per molecule, at least half of which are provided with an -SH or -OH reactive functional group, at least half of these reactive functional groups being mercaptan -SH groups.

5. Composition according to any one of Claims 1 to 4, characterized in that the said monomer is free from a sulphur or oxygen heteroatom interrupting the chain, and has between 3 and 10 carbon atoms, and in that at least 50% by number of its reactive functional groups are mercaptan -SH groups.

6. Composition according to any one of Claims 1 to 5, characterized in that the said monomer is selected from alkane type compounds having a linear or branched aliphatic chain, in which at least 3/4, and preferably all, of the carbon atoms which it contains carry reactive functional groups.

7. Composition according to Claim 6 characterized in that the said reactive functional groups are all mercaptan groups, to the exclusion of -OH groups.

8. Composition according to Claim 7, characterized in that the said monomer is trithioglycerol.

9. Composition according to Claim 7, characterized in that the said monomer is tetramercaptobutane.
